# EUROPEAN PATENT APPLICATION

(11) **EP 2 043 378 A1**
(43) Date of publication of application: **01.04.2009**
(21) Application number: 07816966.1
(22) Date of filing: 25.09.2007
(51) Int. Cl.: H04Q 7/38, H04L 29/06, H04Q 7/22

(54) **THE METHOD FOR CONTROLLING THE REGISTRATION OF THE MS, AND THE GANC**

(30) Priority: 06.11.2006 CN 200610063510
(71) Applicant: Huawei Technologies Co., Ltd., Shenzhen, Guangdong Province 518129 (CN)
(72) Inventor: WENG, Wulin, Shenzhen Guangdong 518129 (CN)
(74) Representative: Thun, Clemens
(86) International application number: PCT/CN2007/070775
(87) International publication number: WO 2008/055431

(57) **Abstract**

A method for controlling registration of an MS and a Generic Access Network Controller (GANC) are provided by this invention. The method includes: a GANC receives a registration message from an MS, if there is an ongoing service between the GANC and the MS, the GANC triggers a handover procedure, or the GANC does not respond to the registration message. The GANC provided includes: a receiving unit, a transmitting unit, a determining unit adapted to determine whether a registration request message should be redirected according to current network condition and registration information of an MS, and a controlling unit adapted to instruct the message transmitting unit, according to the determined result to send a notification message to the MS instructing MS's corresponding operation. Thus, service interruption caused by redirection or deregistration during the MS's movement or a new service requested by the MS, is avoided when the MS is in an ongoing service. Seamless service is guaranteed between the MS and network, mobility of the MS is improved, and subscriber's service experience is enhanced.

## Description

This application claims the priority of Chinese patent application No. 200610063510.9, entitled "METHOD FOR CONTROLLING REGISTRATION OF MOBILE STATION AND GENERIC ACCESS NETWORK CONTROLLER" and filed with the State Intellectual Property Office on November 06, 2006, which is incorporated herein by reference in its entirety.

### FIELD OF THE INVENTION

The present invention relates to mobile communication technologies, and in particular, to a method and a device for controlling registration of a mobile station.

### BACKGROUND OF THE INVENTION

Unlicensed Mobile Access (UMA) technology enables wireless communication devices to be connected seamlessly between Global System for Mobile communication (GSM) networks and Wireless Local Area Networks (WLAN). With the help of UMA, operators can provide voice and data service for their subscribers by accessing GSM networks through WLAN or other wireless technologies. UMA technology has been introduced into 3GPP R6 standard with the name of Generic Access Network (GAN).

In a Generic Access Network, a dual mode terminal, capable of supporting GAN, accesses voice service or data service by connecting to a new network element, Generic Access Network Controller (GANC), through a newly defined interface, Up interface, which is between a Mobile Station (MS) and a GANC. Existing private or public IP networks are used as Generic IP Access Network to provide IP transmission between the MS and the GANC. The identity authentication, encryption and data integrity during transmission of signaling, voice and data are provided by a logic network element, Security Gateway (SEGW), in the GANC.

Through the A/Gb interface in the standard GSM/EDGE Radio Access Network (GERAN), GAN is able to share core network with GERAN and to realize internetworking with core network and coexistence with current GSM networks.

In GAN, voice and data are transmitted by IP transmission channels through the Up interfaces between MSs and a Core Network (CN). For a fixed-line network, voice data flow is the same as normal VoIP data flow, which means that this kind of VoIP bearer channel can connect a compatible fixed telephone medium gateway. And Logic Link Control Protocol Data Units (LLC PDU), which carry GPRS data and signaling, are transparently transmitted between MSs and a Serving GPRS Support Node (SGSN). Thus, IP bearer service is adequately utilized.

In the wireless network, a GANC is normally configured as a GSM cell in a route area or in a location area. In this way, handover and roaming can be realized between GAN and GERAN or other networks.

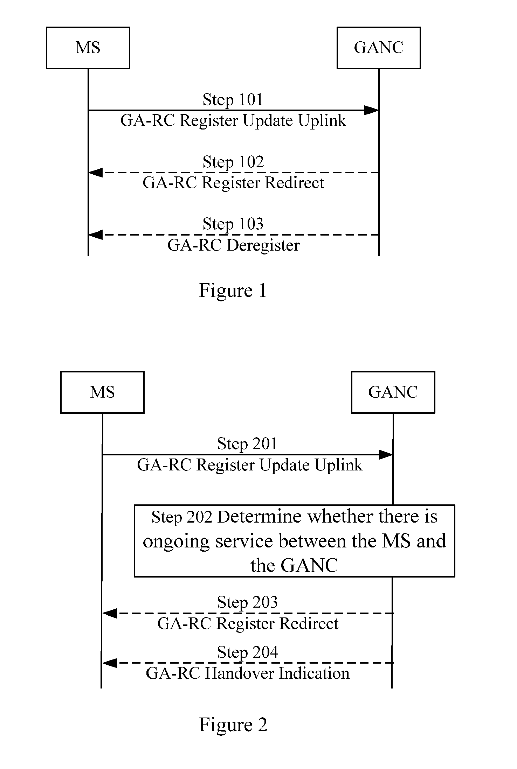

In prior art, when an Access Point (AP), or GSM network coverage, or registration information associated with an MS is changed, the MS will perform a registration update procedure. See Figure 1.

Figure 1 is the flow chart of the registration update procedure of an MS in prior art. Detailed description goes as follows.

Step 101: An MS sends a Generic Access Resource Control (GA-RC) Register Update Uplink message to a GANC.

The GANC will perform the following update procedure according to information carried in the GA-RC Register Update Uplink message. If the MS should be redirected to another GANC, step 102 is performed; if the MS should be deregistered, step 103 is performed; otherwise, no message is returned to the MS.

Step 102: The GANC sends the MS a GA-RC Register Redirect message, informing the MS to redirect to a new GANC or a Public Land Mobile Network (PLMN).

After receiving the GA-RC Register Redirect message, the MS releases the link with the original GANC, and performs a registration procedure towards a new GANC or PLMN.

Step 103: The GANC sends the MS a GA-RC Deregister message, informing the MS to deregister.

After receiving the GA-RC Deregister message, the MS releases the link with the original GANC, and initiates a registration procedure.

In the process of carrying out this invention, the inventor finds problems involved in the scheme of prior art, at least one of which is listed as follows. When there is an ongoing service between an MS and a GANC, both of the outcome steps in the MS's registration update procedure may cause service interruption between the MS and the GANC.

If the GANC finds that the MS needs to be redirected to another GANC, and there is an ongoing Packet Switched (PS) service between the MS and the GANC, the GANC will send the MS the GA-RC Register Redirect message. If at this time the MS is in Generic Access Packet Switched Resources ACTIVE (GA-PSR-ACTIVE) state, after receiving the GA-RC Register Redirect message, the MS will release the link with the original GANC. The service between the MS and network is interrupted at this time, and then the MS initiates a new registration to a new GANC.

When there is an ongoing Packet Switched service or Circuit Switched (CS) service between the MS and the GANC, if the GANC sends the MS the GA-RC Deregister message to inform the MS to deregister, then after receiving the GA-RC Deregister message, the MS will release the link with the original GANC. The service between the MS and network is interrupted at this time, and then the MS initiates a new registration.

### SUMMARY OF THE INVENTION

Embodiments of the present invention provide a method and a device for controlling registration of a mobile station.

A method for controlling registration of an mobile station includes:
receiving, by a GANC receives a registration message from the MS;
if there is an ongoing service between the MS and the GANC, triggering, by the GANC, a handover procedure, or not responding, by the GANC, to the registration message.

A Generic Access Network Controller, GANC, includes:
a message receiving unit, adapted for receiving a registration message from an MS, and triggering a determining unit;
a message transmitting unit, adapted for transmitting to the MS a notification message indicating the MS to trigger a handover procedure, or transmitting to the MS a GA-RC Register Redirect message or a GA-RC Deregister message;
the determining unit, adapted for determining whether the registration request message should be redirected according to current network condition and registration information of the MS, or/and
determining whether there is an ongoing service between the MS and the GANC, and transmitting the determined result to a control unit;
the control unit, adapted for instructing the message transmitting unit, according to the determined result from the determining unit, to transmit the MS the notification message indicating the MS that a handover needs to be triggered, or not to respond to the registration message, wherein the registration message includes GA-RC Register Request message, or GA-RC Register Update Uplink message.

In the mechanism provided by example embodiments of the present invention, an MS sends to a GANC a GA-RC Register Request message or a GA-RC Register Update Uplink message, and then if there is an ongoing service between the MS and the GANC, the GANC triggers a handover procedure, or does not respond to the GA-RC Register Request message or the GA-RC Register Update Uplink message. Thus, service interruption caused by redirection or deregistration during the MS's movement or the MS's requesting new service is avoided, when the MS is in an ongoing service. Seamless service is guaranteed between the MS and network, mobility of the MS is improved, and subscriber's service experience is enhanced.

### BRIEF DESCRIPTION OF THE DRAWINGS

Figure 1 is a flow chart of the registration update procedure of an MS in prior art;

Figure 2 is a flow chart of a first embodiment of a GANC redirecting an MS while processing registration update of the MS according to the present invention;

Figure 3 is a flow chart of a second embodiment of a GANC deregistering an MS while processing registration update of the MS according to the present invention;

Figure 4 is a flow chart of a third embodiment of a GANC redirecting an MS while processing registration request of the MS according to the present invention;

Figure 5 is a flow chart of a fourth embodiment of a GANC obtaining an MS's state information according to the present invention; and

Figure 6 is a structural diagram of a fifth embodiment of a Generic Access Network Controller according to the present invention.

### DETAILED DESCRIPTION OF THE EMBODIMENTS

To make the objective, the technical scheme and advantages of the present invention clearer and more understandable, the present invention will be described in details hereinafter with reference to several embodiments and corresponding drawings.

In the embodiments of a method for controlling registration of a mobile station and a GANC according to the present invention, an MS sends a GANC a GA-RC Register Request message or a GA-RC Register Update Uplink message, and then if there is an ongoing service between the MS and the GANC, the GANC triggers a handover procedure, or does not respond to the GA-RC Register Request message or the GA-RC Register Update Uplink message. Thus, service interruption, which is caused by redirection or deregistration during the MS's movement or the MS's requesting new service, is avoided when the MS is in an ongoing service. Seamless service is guaranteed between the MS and network, mobility of the MS is improved, and subscriber's service experience is enhanced.

Figure 2 is a flow chart of a first embodiment of a GANC redirecting an MS while processing registration update of the MS according to the present invention.

Step 201: An MS sends a GANC a GA-RC Register Update Uplink message.

Step 202: After receiving the GA-RC Register Update Uplink message, the GANC makes a determination upon current network condition and registration information of the MS, and then if the MS needs to be redirected to a new GANC for better service, the GANC may further determine whether there is any ongoing service between the MS and the GANC.

Step 203: If there is no ongoing service between the MS and the GANC, redirection is performed, the GANC sending the MS a GA-RC Register Redirect message.

Step 204: If there is an ongoing service between the MS and the GANC, the GANC chooses to let the MS trigger a handover procedure. Examples of ongoing service between the MS and the GANC is: the MS is in an ongoing PS domain service, e.g. in Generic Access Packet Switched Resources ACTIVE (GA-PSR-ACTIVE) state, or the MS is in an ongoing CS domain service, e.g. in Generic Access Circuit Switched Resources DEDICATED (GA-CSR-DEDICATED) state, or the MS is in an ongoing CS domain service and in an ongoing PS domain service at the same time, e.g. in Generic Access Resource Control Dual Transfer Mode (GA-RC-DTM) state. Examples of a handover procedure being triggered may be: the GANC sends a notification message indicating the MS a handover is needed, e.g. a GA-RC Handover Indication message, or a GA-PSR Uplink Quality Indication message, or a GA-CSR Uplink Quality Indication message, or a Generic Access Uplink Quality Indication message which is used to indicate both CS domain and PS domain. Cause value is contained in the notification message, indicating the MS to perform handover to GERAN or other network for the purpose of guaranteeing a seamless service between the MS and network.

The GA-RC Handover Indication message may carry handover related information, such as: MS identity, service type, type of destination network and cause value. Service type may comprise: Circuit Switched (CS) service, or Packet Switched (PS) service, or Dual Transfer Mode (DTM) service, etc. Correspondingly, the respective state of the MS when in an ongoing service is GA-CSR-DEDICATED state, or GA-PSR-ACTIVE state, or GA-RC-DTM state. Destination network type may be any kind that the MS supports. Cause value is used to describe the reason that causes the handover. The GA-RC Handover Indication message may be a GA-RC Handover Command message, such as: a GA-PSR Handover Command message, or a GA-CSR Handover Command message, or a GA-RC Handover Command which is used to indicate handover simultaneously in CS domain and PS domain.

If there is an ongoing service between the MS and the GANC, even when redirection is required, the GANC may not respond to the GA-RC Register Update Uplink message, not sending the MS a GA-RC Register Redirect message, and thus current service is not interrupted. When the GANC determines that service between the MS and the GANC has been released, the GANC may then respond to the GA-RC Register Update Uplink message again, or choose to wait for a new GA-RC Register Update Uplink message. After sending a GA-RC Register Update Uplink message, if no response message from the GANC is received, the MS may choose not to transmit this message again or to retransmit this message after waiting for a while.

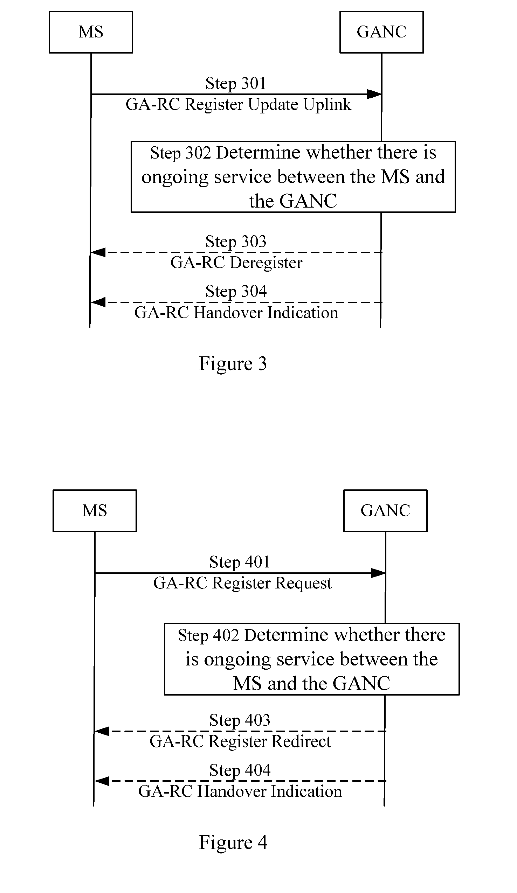

Figure 3 is a flow chart of a second embodiment of a GANC deregisters an MS while processing registration update of the MS according to the present invention.

Step 301: An MS sends a GANC a GA-RC Register Update Uplink message.

Step 302: After receiving the GA-RC Register Update Uplink message, the GANC makes a determination upon current network condition and registration information of the MS, and then if registration of the MS at the GANC needs to be deregistered, the GANC may further determine whether there is any ongoing service between the MS and the GANC.

Step 303: If there is no ongoing service between the MS and the GANC, deregistration is performed, and the GANC sends the MS a GA-RC Deregister message.

For detailed description of Step 304 please refer to step 204 above. Another way to realize the mechanism is that, if there is an ongoing service between the MS and the GANC, the GANC may not respond to the GA-RC Register Update Uplink message, not send the MS a GA-RC Deregister message, and thus current service is not interrupted.

In step 302, after receiving the GA-RC Register Update Uplink message, the GANC makes a determination upon current network condition and registration information of the MS, and then a decision of deregistering the MS may be made. At this time, if there is an ongoing service between the MS and the GANC, the GANC sends the MS a notification message to indicate the MS to trigger a handover procedure to avoid an interruption of service. For detailed description please refer to explanations of step 204.

Figure 4 is a flow chart of a third embodiment of a GANC deregisters an MS while handling the MS's registration request according to the present invention.

Step 401: An MS sends a GANC a GA-RC Register Request message.

Step 402: After receiving the GA-RC Register Request message, the GANC makes a determination upon current network condition and registration information of the MS, and then if the MS needs to be redirected, the GANC may further determine whether there is any ongoing service between the MS and the GANC.

Step 403: If there is no ongoing service between the MS and the GANC, redirection of the MS is performed, the GANC sending the MS a GA-RC Register Redirect message.

For detailed description of Step 404 please refer to step 204 above. Another way to realize the mechanism is that, if there is an ongoing service between the MS and the GANC, the GANC may not respond to the GA-RC Register Request message, not send the MS a GA-RC Register Redirect message, and thus current service is not interrupted.

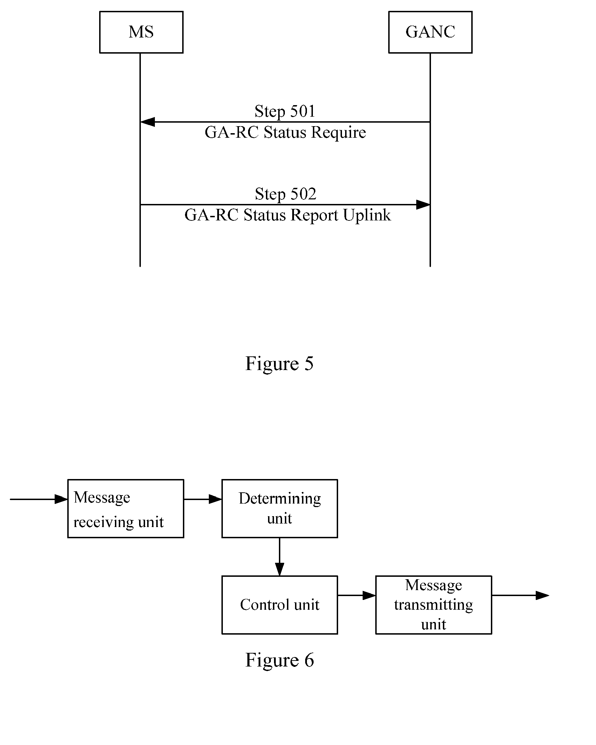

Figure 5 is a flow chart of a fourth embodiment of a GANC obtains an MS's state information according to the present invention.

In order to obtain current state of the MS in time, a GANC may send an inquiry message to the MS, instructing the MS to transmit to the GANC a report message, in which identity information and service state of the MS are contained. Description of the mechanism is followed and taken figure 5 as an example.

Step 501: A GANC periodically sends a designated MS a GA-RC Status Require message, instructing the MS to report its current service state.

Step 502: The MS sends the GANC a GA-RC Status Report Uplink message, in which the MS's identity information and service state are contained. Current service state of the MS may be contained, such as GA-PSR-ACTIVE state, or GA-CSR-DEDICATED state, or GA-RC-DTM state which means service in PS domain and service in CS domain are operated at the same time.

In a simpler realization, an MS may directly send a GANC a report message, in which service state of the MS is contained, or identity information of the MS may be further contained. An example is that an MS periodically sends a GANC a GA-RC Status Report Uplink message, informing network of the MS's current service state and identity information.

From the above embodiments, a person skilled in the art can clearly understand that this invention may be realized with the help of software plus necessary generic hardware platform, or be realized through hardware. But in most circumstances, former way is a better choice. Base on this principle, the essential parts or the contributory parts over prior art of the mechanism of this invention may be realized in the form of a software product. Such a software product is saved in a storage medium, and includes several instructions adapted to enable a computing device, such as a PC, a server, or a network device to carry out the methods of the embodiments according to the invention.

Figure 6 is a structural diagram of a fifth embodiment of a Generic Access Network Controller according to the present invention.

The message receiving unit is adapted for receiving a GA-RC Register Request message of a GA-RC Register Update Uplink message, and to trigger the determining unit.

The message transmitting unit is adapted for receiving instructions from the control unit, and according to the instructions sending an MS a notification message indicating the MS that a handover needs to be triggered, or sending the MS a GA-RC Register Redirect message or a GA-RC Deregister message.

The determining unit is adapted for determining upon current network condition and registration information of the MS, or determining whether there is any ongoing service between the MS and the GANC, and transmitting the determined result to the control unit.

The control unit is adapted for instructing the message transmitting unit, according to the determined result inputted by the determining unit, to transmit the MS the notification message indicating the MS that a handover needs to be triggered, or not to respond to the GA-RC Register Request message or GA-RC Register Update Uplink message.

If there is an ongoing service between the MS and the GANC, the control unit may instruct the message transmitting unit to send the MS a notification message indicating to the MS that a handover procedure needs to be triggered. Example of ongoing service between the MS and the GANC is: the MS is in an ongoing PS domain service, e.g. in GA-PSR-ACTIVE state, or the MS is in an ongoing CS domain service, e.g. in GA-CSR-DEDICATED state, or the MS is in an ongoing CS domain service and in an ongoing PS domain service at the same time, e.g. in GA-RC-DTM state. Examples of the notification message are: a GA-RC Handover Indication message, or a GA-PSR Uplink Quality Indication message. Cause value is contained in the notification message, indicating the MS to handover to a GERAN or other network for the purpose of guaranteeing a seamless service between the MS and network.

The GA-RC Handover Indication message may carry handover related information, such as: MS identity, service type, destination network type, cause value, and etc. Service type may include: CS service, PS service, or DTM service, etc. Correspondingly, the respective state of the MS when in an ongoing service is GA-CSR-DEDICATED state, or GA-PSR-ACTIVE state, or GA-RC-DTM state. Destination network type may be any kind that the MS supports. Cause value is used to describe the cause of the handover.

If there is an ongoing service between the MS and the GANC, even when redirection is required, the control unit may instruct the message transmitting unit not to send the MS a GA-RC Register Redirect message, thus current service is not interrupted.

If there is an ongoing service between the MS and the GANC, the control unit may instruct the message transmitting unit not to send the MS a GA-RC Deregister message, and thus current service is not interrupted.

If the determining unit determines that there is no ongoing service between the MS and the GANC, the control unit may instruct the message transmitting unit to send the MS a GA-RC Register Redirect message to perform redirection or a GA-RC Deregister message to perform deregistration.

In order to let a GANC obtain an current state of the MS in time, the message transmitting unit may send an inquiry message to the MS, instructing the MS to transmit to the GANC a report message, in which identity information and service state of the MS are contained.

For example, the message transmitting unit periodically sends a designated MS a GA-RC Status Require message, instructing the MS to report its current service state;

The MS then sends the message receiving unit a GA-RC Status Report Uplink message, in which identity information and service state of the MS are contained. Current service state of the MS may be contained, such as GA-PSR-ACTIVE state, or GA-CSR-DEDICATED state, or GA-RC-DTM state which means service in PS domain and service in CS domain are operated at the same time.

In a simpler realization, an MS may directly send the message receiving unit a report message, in which service state of the MS is contained, or identity information of the MS may be further contained. An example is that an MS periodically sends the GANC a GA-RC Status Report Uplink message, informing network of current service state and identity information of the MS.

Through some of the preferred embodiments of the present invention, the invention is described and illustrated with the help of figures. However, a person skilled in the art would understand that, without departing from the spirit and the scope of the invention, various changes in form and in detail can be made.

## Claims

1. A method for controlling registration of a mobile station, comprising:
receiving, by a Generic Access Network Controller, GANC, a registration message from a Mobile Station, MS;
if there is an ongoing service between the MS and the GANC, triggering, by the GANC a handover procedure, or not responding, by the GANC, to the registration message.

2. The method according to claim 1, further comprising:
if there is no ongoing service between the MS and the GANC, instructing, by the GANC, redirection of the MS or deregistration of the MS.

3. The method according to claim 1, wherein the registration message comprises a GA-RC Register Request message or a GA-RC Register Update Uplink message sent by the MS to the GANC.

4. The method according to any one of claims 1 to 3, wherein there is an ongoing service between the MS and the GANC comprises:
when in an ongoing packet switched domain service, the MS is in GA-PSR-ACTIVE state; or
when in an ongoing circuit switched domain service, the MS is in GA-CSR-DEDICATED state; or the MS is both in an ongoing circuit switched domain service and in an ongoing packet switched domain service at the same time.

5. The method according to claim 4, wherein the process of not responding by the GANC to the registration message comprises:
not sending, by the GANC, the MS a GA-RC Register Redirect message, or
the GANC does not send the MS a GA-RC Deregister message.

6. The method according to claim 1, wherein the process of triggering by the GANC a handover procedure comprises: sending, by the GANC, a notification message indicating the MS that a handover is needed.

7. The method according to claim 6, wherein the notification message comprises:
a Generic Access Handover Command message, indicating handover all of the current service to another access network; or
a Generic Access Uplink Quality Indication message, adapted to indicate uplink condition of a service in circuit switched domain, or in packet switched domain, or both in circuit switched and packet switched domains.

8. The method according to claim 1 or claim 2, whether there is an ongoing service between the MS and the GANC is determined through following steps:
sending, by the GANC, an inquiry message to the MS;
sending, by the MS, the GANC a report message comprising identity information of the MS and service state of the MS.

9. A Generic Access Network Controller, comprising:
a message receiving unit, adapted for receiving a registration message from an MS, and to trigger a determining unit;
a message transmitting unit, adapted for transmitting to the MS a notification message indicating the MS to trigger a handover procedure, or transmitting to the MS a GA-RC Register Redirect message or a GA-RC Deregister message;
the determining unit, adapted for determining whether the registration message needs to be redirected according to current network condition and registration information of the MS, or/and
determining whether there is an ongoing service between the MS and the GANC, and instructing the message transmitting unit, according to the determined result from the determining unit, to transmit the MS the notification message indicating the MS that a handover needs to be triggered, or not to respond to the registration message, wherein the registration message comprises a GA-RC Register Request message or a GA-RC Register Update Uplink message.

10. The GANC according to claim 9, wherein the control unit instructing the message transmitting unit to transmit the MS the notification message comprises:
if the determining unit determines that the MS needs to be redirected or deregistered, and there is an ongoing service between the MS and the GANC, the control unit instructs the message transmitting unit to transmit the MS a Generic Access Handover Command message or a Generic Access Uplink Quality Indication message indicating the MS that a handover needs to be triggered.

11. The GANC according to claim 9, wherein the control unit instructing the message transmitting unit not to respond the registration message comprises:
if the determining unit determines that there is an ongoing service between the MS and the GANC, the control unit instructing the message transmitting unit not to send the MS a GA-RC Register Redirect message, or not to send the MS a GA-RC Deregister message.
